(19) Europäisches Patentamt
European Patent Office
Office européen des brevets

(11) **EP 1 228 129 B1**

(12) **EUROPÄISCHE PATENTSCHRIFT**

(45) Veröffentlichungstag und Bekanntmachung des Hinweises auf die Patenterteilung:
**26.11.2003 Patentblatt 2003/48**

(21) Anmeldenummer: **00965893.1**

(22) Anmeldetag: **24.08.2000**

(51) Int Cl.[7]: **C08K 5/00**

(86) Internationale Anmeldenummer:
**PCT/EP00/08251**

(87) Internationale Veröffentlichungsnummer:
**WO 01/018101 (15.03.2001 Gazette 2001/11)**

(54) **FORMMASSEN**

MOLDING MATERIALS

MATIERES DE MOULAGE

(84) Benannte Vertragsstaaten:
**BE DE FR GB IT NL**

(30) Priorität: **06.09.1999 DE 19942396**

(43) Veröffentlichungstag der Anmeldung:
**07.08.2002 Patentblatt 2002/32**

(73) Patentinhaber: **Bayer Aktiengesellschaft**
**51368 Leverkusen (DE)**

(72) Erfinder: **DÖBLER, Martin**
**40593 Düsseldorf (DE)**

(56) Entgegenhaltungen:
**EP-A- 0 510 958**
**EP-A- 0 607 031**
**EP-A- 0 767 221**
**US-A- 5 397 819**

- **DATABASE WPI Section Ch, Week 199742 Derwent Publications Ltd., London, GB; Class A60, AN 1997-402573 XP002157753 & JP 09 208840 A (KUREHA KAGAKU KOGYO KK), 12. August 1997 (1997-08-12) -& WO 97 28212 A (KUREHA) 7. August 1997 (1997-08-07)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 228 129 B1

Printed by Jouve, 75001 PARIS (FR)

## Beschreibung

Die vorliegende Erfindung betrifft Formmassen aus transparenten thermoplastischen Kunststoffen und Phthalocyaninen oder Naphthalocyaninen sowie deren Herstellung, deren Verwendung und aus diesen Formmassen hergestellte Erzeugnisse, insbesondere Verscheibungen aus diesen Formmassen.

Bei der Verwendung von transparenten thermoplastischen Kunststoffen, insbesondere von Polycarbonat, in Kraftfahrzeugen, Gebäuden oder ähnlichen Anwendungen, beispielsweise für Verscheibungen, führt die hohe Wärmedurchlässigkeit bei Sonneneinstrahlung, d.h. die hohe Durchlässigkeit für nahes Infrarotlicht, zu einer unerwünschten Aufwärmung im Inneren.

Wie beispielsweise bei Parry Moon, Journal of the Franklin Institute, Band 230, Seite 583 - 618 (1940), beschrieben ist, entfällt der größte Teil der solaren Energie neben dem sichtbaren Bereich des Lichtes zwischen 400 und 650 nm auf den Bereich des nahen Infrarots (NIR) zwischen 650 und 1100 nm. Die üblichen transparenten thermoplastischen Kunststoffe, insbesondere Polycarbonat, sind sowohl im sichtbaren Bereich, als auch im NIR hochtransparent. Diese führen deshalb als Verscheibungsmaterial zu den obengenannten Nachteilen.

Der Zusatz von geeigneten NIR-Absorbem zu transparenten thermoplastischen Kunststoffen könnte zu Verscheibungsmaterialien ohne diese Nachteile führen.

Es werden Verscheibungsmaterialien benötigt, welche bei möglichst hoher Transparenz im sichtbaren Bereich des Spektrums im NIR eine möglichst geringe Transparenz aufweisen.

In der Literatur sind anorganische NIR-Absorber bekannt. Diese führen jedoch wegen der geringen Verträglichkeit mit transparenten Thermoplasten zu stark trüben Formkörpern, welche als Verscheibungen für viele Anwendungen ungeeignet sind.

Ferner sind in der Literatur organische NIR-Absorber bekannt, wie z.B. bei B. J. Fabian, H. Nakazumi, H. Matsuoka, Chem.Rev. 92, 1197 (1992).

Für oben genannte Anwendungen ist auch eine hohe Langzeitlichtbeständigkeit für Außenanwendungen notwendig, sowie eine gute Verarbeitbarkeit ohne Zersetzung der Kunststoffmatrix und ohne Freisetzung von übelriechenden Gasen bei der großtechnischen Produktion. Ferner sollen aus ökologischen und legislatorischen Gründen möglichst halogenfreie NIR-Absorber und Naphthalocyanine eingesetzt werden.

NIR-Absorber mit hoher Lichtechtheit sind z.B Phthalocyanine und Naphthalocyanine. Herkömmliche Phthalocyanine und Naphthalocyanine zeigen neben der Absorption im NIR jedoch auch viel Absorption im sichtbaren Bereich des Lichtes. Dies ist für viele Anwendungen unerwünscht. Ferner sind viele Phthalocyanine und Naphthalocyanine mit transparenten thermoplastischen Kunststoffen, insbesondere mit Polycarbonat, nicht derart mischbar, daß Formkörper ohne Trübung entstehen.

Es waren bislang nur Phthalocyanine und Naphthalocyanine mit N, S oder halogenhaltigen Seitengruppen bekannt, welche ihr Absorptionsmaximum bei mehr als 700 nm aufweisen und mit Polycarbonat Formmassen ohne Trübung bilden.

Z.B. werden in EP-A 767221 Phthalocyanine beschrieben, welche aminofunktionelle Seitengruppen tragen, um die Löslichkeit zu verbessern. Additive mit Aminogruppen oder Amidgruppen können jedoch zu Molekulargewichtsabbau von Polycarbonat und von anderen transparenten thermoplastischen Kunststoffen führen. Es sollen daher Phthalocyanine und Naphthalocyanine ohne derartige Gruppen eingesetzt werden.

EP-A 607 031 und US-A 5.397,819 offenbaren Formmassen, die neben einem transparenten thennoplastischen Kunststoff ein Phthalocyanin enthalten.

In JP-A 06 240 146 werden Phthalocyanine beschrieben, welche schwefelhaltige Substituenten tragen. Bei der großtechnischen Verarbeitung derartiger Verbindungen können jedoch schwefelhaltige Zersetzungsprodukte auftreten, welche meist übel riechen und toxisch sind. Daher soll auf schwefelhaltige Additive verzichtet werden.

In US-A 5 712 332 werden fluorhaltige Phthalocyanine beschrieben, welche im NIR absorbieren. Aus ökologischen und legislatorischen Gründen sollen jedoch halogenfreie Formmassen entwickelt werden.

Der vorliegenden Erfindung liegt daher die Aufgabe zugrunde, Formmassen bereitzustellen, die als Verscheibungsmaterialien für Kraftfahrzeuge und Gebäude geeignet sind und die im Bereich des sichtbaren Lichtes hochtransparent sind und die eine geringe Durchlässigkeit für NIR aufweisen.

Die erfindungsgemäße Aufgabe wird gelöst durch Formmassen enthaltend

a) einen transparenten thermoplastischen Kunststoff und

b) 0,1 ppm bis 1 Gew.-%, bezogen auf die Masse des transparenten thermoplastischen Kunststoffes, eines Phthalocyanines der allgemeinen Formel (I)

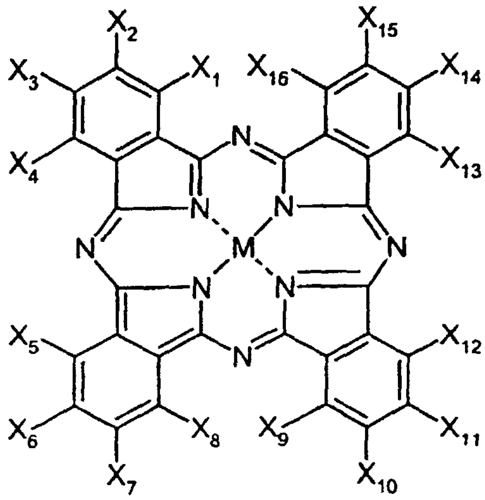

(I)

wobei

M ein beliebiges Atom oder eine beliebige Verbindung, bevorzugt VO, Cu, Al, Zn, Ni, 2 Atome Wasserstoff, $SiR_2$, AlR, Mg, Fe, GaR, MnR, SnR, 2 Atome Natrium, 2 Atome Lithium, 2 Atome Kalium oder TiO, besonders bevorzugt VO oder Cu, ist

und

R ein aliphatischer Rest oder ein aromatischer Rest oder ein Alkoxyrest oder ein Aryloxyrest, bevorzugt ein solcher ohne N-Atome, S-Atome oder Halogenatome und besonders bevorzugt ein solcher ohne N-Atome, S-Atome oder Halogenatome und mit 1 bis 30, insbesondere 1 bis 10, C-Atomen, ist

und

$X_1$ bis $X_{16}$ unabhängig voneinander Wasserstoff, oder ein aliphatischer Rest, oder ein aromatischer Rest, oder ein Alkoxyrest, oder ein Aryloxyrest, wobei alle diese Reste keine N-Atome, keine S-Atome und keine Halogenatome enthalten sollen und wobei mindestens einer der Substituenten $X_1$ bis $X_{16}$, insbesondere mindestens vier der Substituenten $X_1$ bis $X_{16}$, nicht Wasserstoff ist, bevorzugt Wasserstoff, oder ein aliphatischer Rest, oder ein aromatischer Rest, oder ein Alkoxyrest oder ein Aryloxyrest, wobei alle diese Reste keine N-Atome, keine S-Atome und keine Halogenatome enthalten sollen und wobei mindestens einer der Substituenten $X_1$ bis $X_{16}$, insbesondere mindestens vier der Substituenten $X_1$ bis $X_{16}$, nicht Wasserstoff ist, und wobei alle diese Reste, die nicht Wasserstoff sind, 1 bis 30 C-Atome, insbesondere 1 bis 10 C-Atome enthalten sollen und besonders bevorzugt Wasserstoff, oder ein aliphatischer Rest, oder ein aromatischer Rest, oder ein Alkoxyrest, oder ein Aryloxyrest, wobei alle diese Reste keine N-Atome und keine S-Atome und keine Halogenatome enthalten sollen, und wobei mindestens einer der Substituenten $X_1$ bis $X_{16}$, insbesondere mindestens vier der Substituenten $X_1$ bis $X_{16}$, nicht Wasserstoff ist, und wobei alle diese Reste, die nicht Wasserstoff sind, 1 bis 10 C-Atome enthalten sollen, und wobei diese Reste, die nicht Wasserstoff sind, sperrige Reste wie z.B. tert.-Butylreste, Phenoxyreste oder Phenylreste, sind

oder eines Naphthalocyanines der allgemeinen Formel (II)

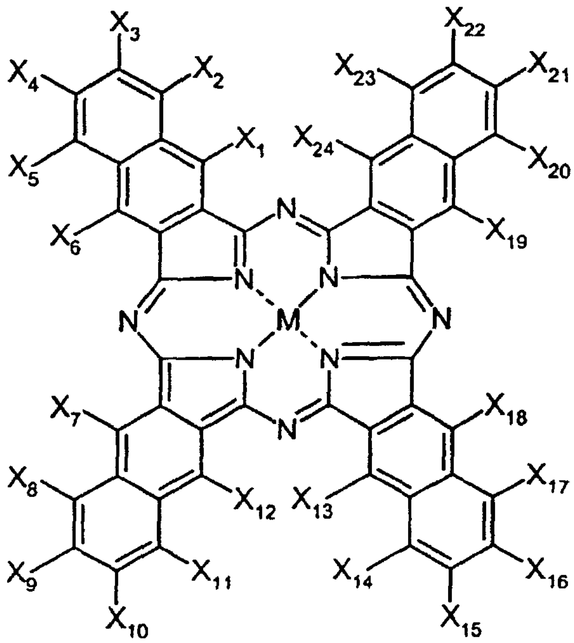

(II)

wobei

M ein beliebiges Atom oder eine beliebige Verbindung, bevorzugt VO, Cu, Al, Zn, Ni, 2 Atome Wasserstoff, $SiR_2$, AlR, Mg, Fe, GaR, MnR, SnR, 2 Atome Natrium, 2 Atome Lithium, 2 Atome Kalium oder TiO, besonders bevorzugt VO oder Cu, ist

und

R ein aliphatischer Rest oder ein aromatischer Rest oder ein Alkoxyrest oder ein Aryloxyrest, bevorzugt ein solcher ohne N-Atome, S-Atome oder Halogenatome und besonders bevorzugt ein solcher ohne N-Atome, S-Atome oder Halogenatome und mit 1 bis 30, insbesondere 1 bis 10, C-Atome, ist

und

$X_1$ bis $X_{24}$ unabhängig voneinander Wasserstoff, oder ein aliphatischer Rest, oder ein aromatischer Rest, oder ein Alkoxyrest, oder ein Aryloxyrest, wobei alle diese Reste keine N-Atome, keine S-Atome und keine Halogenatome enthalten sollen und wobei mindestens einer der Substituenten $X_1$ bis $X_{24}$, insbesondere mindestens vier der Substituenten $X_1$ bis $X_{24}$, nicht Wasserstoff ist, bevorzugt Wasserstoff, oder ein aliphatischer Rest, oder ein aromatischer Rest, oder ein Alkoxyrest oder ein Aryloxyrest, wobei alle diese Reste keine N-Atome, keine S-Atome und keine Halogenatome enthalten sollen und wobei mindestens einer der Substituenten $X_1$ bis $X_{24}$, insbesondere mindestens vier der Substituenten $X_1$ bis $X_{24}$, nicht Wasserstoff ist, und wobei alle diese Reste, die nicht Wasserstoff sind, 1 bis 30 C-Atome, insbesondere 1 bis 10 C-Atome enthalten sollen und besonders bevorzugt Wasserstoff, oder ein aliphatischer Rest, oder ein aromatischer Rest, oder ein Alkoxyrest, oder ein Aryloxyrest, wobei alle diese Reste keine N-Atome und keine S-Atome und keine Halogenatome enthalten sollen, und wobei mindestens einer der Substituenten $X_1$ bis $X_{24}$, insbesondere mindestens vier der Substituenten $X_1$ bis $X_{24}$, nicht Wasserstoff ist, und wobei alle diese Reste, die nicht Wasserstoff sind, 1 bis 10 C-Atome enthalten sollen, und wobei diese Reste, die nicht Wasserstoff sind, sperrige Reste wie z.B. tert.-Butylreste, Phenoxyreste oder Phenylreste, sind

sowie durch deren Herstellung, durch deren Verwendung und durch aus diesen Formmassen hergestellte Erzeugnisse.

Besonders bevorzugte Phthalocyanine sind Kupfer(II) 1,4,8,11,15,18,22,25-octabutoxy-29H,31H-phthalocyanin oder Vanadyl 2,9,16,23-tetraphenoxy-29H,31Hphthalocyanin.

Die erfindungsgemäßen Phthalocyanine werden bevorzugt in Konzentrationen von 0,1 ppm bis 1 Gew.-%,

besonders bevorzugt zwischen 1 ppm und 0,1 Gew.-% und ganz besonders bevorzugt zwischen 30 ppm und 200 ppm, bezogen auf die Masse des transparenten thermoplastischen Kunststoffes, eingesetzt.

Besonders bevorzugte Naphthalocyanine sind Vanadyl 5,14,23,32-tetraphenyl-2,3-naphthalocyanin und Vanadyl 2,11,20,29-tetra-*tert*-butyl-2,3-naphthalocyanin.

Die erfindungsgemäßen Naphthalocyanine werden bevorzugt in Konzentrationen von 0,1 ppm bis 1 Gew.-%, besonders bevorzugt zwischen 1 ppm und 0,1 Gew.-% und ganz besonders bevorzugt zwischen 30 ppm und 200 ppm, bezogen auf die Masse des transparenten thermoplastischen Kunststoffes, eingesetzt.

Die erfindungsgemäßen Formmassen können auch Mischungen verschiedener Phthalocyanine der allgemeinen Formel (I) und/oder verschiedener Naphthalocyanine der allgemeinen Formel (II) enthalten.

Ganz besonders bevorzugt sind Mischungen von jeweils mehreren Naphthalocyaninen und Phthalocyaninen, welche Absorptionsmaxima bei stark unterschiedlichen Wellenlängen des NIR besitzen. Dadurch kann ein möglichst großer Bereich des NIR für den Wärmefilter abgedeckt werden. Eine Optimierung kann der Fachmann durchführen.

Die Herstellung der erfindungsgemäßen NIR-Absorber kann nach bekannten Methoden erfolgen. Diese sind beispielsweise beschrieben in "Phthalocyanines and Related Compounds", Hanack, Heckmann and Polley, Houben-Weyl, Vol. E9d, Seite 717 bis 824, Thieme Verlag, Stuttgart, 1998. Teilweise sind sie im Handel erhältlich.

Als transparente Thermoplaste geeignet sind insbesondere Polycarbonat, Polymethylmethacrylat, Polystyrol, Polyethylenterephthalat, glykolmodifiziertes Polyethylenterephthalat, Polyvinylchlorid und transparente Polyolefine, wie sie z.B. durch metallocenkatalysierte Polymerisation herstellbar sind. Polycarbonat ist besonders bevorzugt.

Erfindungsgemäß kann jedes Polycarbonat eingesetzt werden.

Erfindungsgemäß geeignete Polycarbonate sind sowohl Homopolycarbonate als auch Copolycarbonate. Auch eine Mischung der erfindungsgemäß geeigneten Polycarbonate kann verwendet werden.

Die Polycarbonate können teilweise oder vollständig durch aromatische Polyestercarbonate ersetzt werden.

Die Polycarbonate können auch Polysiloxan-Blöcke enthalten. Deren Herstellung wird beispielsweise in US-A 3 821 325, US-A 3 189 662 und US-A 3 832 419 beschrieben.

Bevorzugte Polycarbonate sind solche Homopolycarbonate und Copolycarbonate auf Basis der Bisphenole der allgemeinen Formel (III),

$$HO\text{-}Z\text{-}OH \quad \text{(IIII)}$$

worin Z ein divalenter organischer Rest mit 6 bis 30 C-Atomen ist, der eine oder mehrere aromatische Gruppen enthält.

Beispiele für Bisphenole gemäß der allgemeinen Formel (III) sind Bisphenole, die zu den folgenden Gruppen gehören:

Dihydroxydiphenyle,
Bis-(hydroxyphenyl)-alkane,
Bis-(hydroxyphenyl)-cycloalkane,
Indanbisphenole
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide und
α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (III).

Beispiele für Bisphenole gemäß der allgemeinen Formel (III) sind insbesondere die folgenden Verbindungen:

Hydrochinon,
Resorcin,
4,4'-Dihydroxydiphenyl,
Bis-(4-hydroxyphenyl)sulfid,
Bis-(4-hydroxyphenyl)sulfon,
Bis-(3,5-dimethyl-4-hydroxyphenyl)-methan,
Bis-(3,5-dimethyl-4-hydroxyphenyl)-sulfon,
1,1-Bis-(3,5-dimethyl-4-hydroxyphenyl)-p/m-diisopropylbenzol,

1,1-Bis-(4-hydroxyphenyl)-1-phenyl-ethan,
1,1-Bis-(3,5-dimethyl-4-hydroxyphenyl)-cyclohexan,
1,1-Bis-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methylcyclohexan.
1,1-Bis-(4-hydroxyphenyl)-cyclohexan,
1,1-Bis-(4-hydroxyphenyl)-3,3,5-trimethylcyclohexan,
2,2-Bis-(3,5-dichlor-4-hydroxyphenyl)-propan,
2,2-Bis-(3-methyl-4-hydroxyphenyl)-propan,
2,2-Bis-(3,5-dimethyl-4-hydroxyphenyl)-propan,
2,2-Bis-(4-hydroxyphenyl)-propan (d.h. Bisphenol A),
2,2-Bis-(3-chlor-4-hydroxyphenyl)-propan,
2,2-Bis-(3,5-dibrom-4-hydroxyphenyl)-propan,
2,4-Bis-(4-hydroxyphenyl)-2-methylbutan,
2,4-Bis-(3,5-dimethyl-4-hydroxyphenyl)-2-methylbutan,
$\alpha,\alpha'$-Bis-(4-hydroxyphenyl)-o-diisopropylbenzol,
$\alpha,\alpha'$-Bis-(4-hydroxyphenyl)-m-diisopropylbenzol (d.h. Bisphenol M),
$\alpha,\alpha'$-Bis-(4-hydroxyphenyl)-p-diisopropylbenzol und
Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (III) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physis of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern 62039/1986, 62040/1986 und 105550/1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestem nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beschrieben in H. Schnell, "Chemistry and Physis of Polycarbonates", Polymer Reviews, Band 9, S. 44 bis 51, Interscience Publishers, New York, London, Sidney, 1964 sowie in DE-A 1 031 512, in US-A 3 022 272, in US-A 5 340 905 und in US-A 5 399 659.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Bei der Herstellung von Polycarbonaten nach dem Schmelzeumesterungsverfahren kann die Reaktion des

Bisphenols und des Kohlensäurediesters kontinuierlich oder diskontinuierlich beispielsweise in Rührkesseln, Dünnschichtverdampfern, Fallfilmverdampfem, Rührkesselkaskaden, Extrudern, Knetern, einfachen Scheibenreaktoren und Hochviskosscheibenreaktoren durchgeführt werden.

Kohlensäurediester, die zur Herstellung von Polycarbonaten eingesetzt werden können, sind zum Beispiel Diarylester der Kohlensäure, wobei die beiden Arylreste bevorzugt jeweils 6 bis 14 C-Atome haben. Vorzugsweise werden die Diester der Kohlensäure auf der Basis von Phenol oder alkylsubstituierten Phenolen, also zum Beispiel Diphenylcarbonat oder Dikresylcarbonat, eingesetzt. Bezogen auf 1 Mol Bisphenol werden die Kohlensäurediester bevorzugt in einer Menge von 1,01 bis 1,30 Mol, besonders bevorzugt in einer Menge von 1,02 bis 1,15 Mol eingesetzt.

Die erfindungsgemäß geeigneten Polycarbonate haben bevorzugt ein Gewichtsmittel der molaren Masse ($\overline{M}_w$), welches sich z.B. durch Ultrazentrifugation oder Streulichtmessung bestimmen läßt, von 10 000 bis 200 000 g/mol. Besonders bevorzugt haben sie ein Gewichtsmittel der molaren Masse von 12 000 bis 80 000 g/mol.

Die mittlere molare Masse der erfindungsgemäßen Polycarbonate kann zum Beispiel in bekannter Weise durch eine entsprechende Menge an Kettenabbrechem eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigem. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl)-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und $\alpha,\alpha',\alpha''$-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechem in der wäßrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Den erfindungsgemäßen Polycarbonaten können andere Polymere zugemischt werden, wodurch sogenannte Polymerblends erhalten werden. Beispielsweise können Blends aus den erfindungsgemäßen Polycarbonaten ABS-Polymeren oder aus den erfindungsgemäßen Polycarbonaten und Polyestern, wie z.B. Polyethylenterephthalat oder Polybutylenterephthalat, hergestellt werden. Die Blends sollen so zusammengesetzt sein, daß sie transparent sind.

Die erfindungsgemäßen Formmassen eignen sich zur Herstellung von Verscheibungen, die als Wärmefilter dienen können, indem sie IR-Strahlung absorbieren. Dabei sind sie im Bereich des sichtbaren Lichtes transparent. Sie haben eine hohe Langzeitbeständigkeit gegen Umwelteinflüsse wie z.B. UV-Strahlung.

Die erfindungsgemäßen Formmassen haben den Vorteil, daß sie trübungsfrei sind und daß sie eine hohe Transparenz im sichtbaren Bereich des Lichts sowie eine geringe Transparenz im NIR haben. Ferner bleiben die vorteilhaften Eigenschaften des unmodifizierten transparenten thermoplastischen Kunsstoffes, insbesondere des Polycarbonates, wie z.B. die hohe Lichtechtheit, die geringe Trübung und die guten mechanischen Eigenschaften erhalten.

Die erfindungsgemäßen Formmassen haben nicht die Nachteile, die der Zusatz von Aminogruppen, Amidgruppen, schwefelhaltigen Gruppen oder halogenhaltigen Gruppen mit sich bringt.

Optional können auch Mischungen von einem oder mehreren Phthalocyaninen oder Naphthalocyaninen mit weiteren literaturbekannten NIR-Absorbem verwendet werden. Ferner können auch Mischungen mit herkömmlichen Farbstoffen, welche im sichtbaren Bereich absorbieren, verwendet werden, um einen gewünschten Farbton zu erzeugen. Die Methoden hierfür sind dem Fachmann bekannt. Diese Farbstoffe können z.B. in Konzentrationen von 0.1 ppm bis 1 % eingesetzt werden, bevorzugt zwischen 1 ppm und 0.1 % und besonders bevorzugt zwischen 30 und 200 ppm.

Zur Modifizierung der Eigenschaften können den erfindungsgemäßen Formmassen übliche Additive zugemischt und/oder auf die Oberfläche aufgebracht werden. Übliche Additive sind z.B. Füllstoffe (z.B. mineralische Füllstoffe), Verstärkungsstoffe (z.B. Glasfasern), Stabilisatoren (z.B. UV-Stabilisatoren, Thermostabilisatoren, Gammastrahlenstabilisatoren), Antistatika, Fließhilfsmittel, Entformungsmittel, Brandschutzmittel, Farbstoffe und Pigmente. Die genannten und weitere geeignete Additive sind z.B. beschrieben in Gächter, Müller, Kunststoff-Additive, 3. Ausgabe, Hanser-Verlag, München, Wien, 1989.

Optional können weitere Additive verwendet werden, wie z.B. die in EP 0 839 623 und EP-A 0 500 496 beschriebenen Flammschutzmittel, Füllmittel, Schaummittel, Farbstoffen, Pigmente, optische Aufheller und Nukleierungsmittel oder mehrere, bevorzugt in Mengen von jeweils bis zu 5 Gew.-%, bevorzugt 0,01 bis 5 Gew.-% bezogen auf die gesamte Mischung, besonders bevorzugt 0,01 Gew.-% bis 1 Gew.-% bezogen auf die Masse des thermoplastischen transparenten Kunststoffes. Auch Mischungen dieser Zusatzstoffe sind geeignet.

Die erfindungsgemäßen Formmassen können auch weitere NIR-Absorber enthalten.

Die erfindungsgemäßen Phthalocyanine oder Naphthalocyanine und ggf. die weiteren Zusätze oder Additive können in den transparenten thermoplastischen Kunststoff z.B. mittels Extruder eingearbeitet werden. Hierbei erfolgt bevorzugt ein Aufschmelzen des transparenten thermoplastischen Kunststoffs.

Erfindungsgemäß geeignete UV-Absorber und Antioxidantien, die den erfindungsgemäßen Formmassen als weitere Additive hinzugefügt werden können, sind z.B. in EP-A 0 839 623, WO 96/15102 und EP-A 0 500 496 beschrieben.

Besonders geeignet als UV-Absorber sind Benzotriazole, Triazine, Benzophenone, sowie weitere Verbindungen wie z.B. arylierte Cyanoacrylate.

Besonders bevorzugt sind Hydroxy-Benzotriazole, wie 2-(3',5-'Bis-(1,1-dimethylbenzyl)-2'-hydroxy-phenyl)-benzotriazol (Tinuvin® 234, Ciba Spezialitätenchemie, Basel), Tinuvin® 326 FL (CAS 2895-11-5) (Ciba Spezialitätenchemie, Basel), 2-(2'-Hydroxy-5'-(*tert*-octyl)-phenyl)-benzotriazol (Tinuvin® 329, Ciba Spezialitätenchemie, Basel), 2-(2'-Hydroxy-3'-(2-butyl)-5'-(*tert*-butyl)-phenyl)-benzotriazol (Tinuvin® 350, Ciba Spezialitätenchemie, Basel), Bis-(3-(2H-benztriazolyl)-2-hydroxy-5-*tert*-octyl)methan, (Tinuvin® 360, Ciba Spezialitätenchemie, Basel), 2-(4-Hexoxy-2-hydroxyphenyl)-4,6-diphenyl-1,3,5-triazin (Tinuvin® 1577, Ciba Spezialitätenchemie, Basel), sowie das Benzophenon 2,4-Dihydroxy-benzophenon (Chimasorb22®, Ciba Spezialitätenchemie, Basel).

Bevorzugt werden die UV-Absorber in Mengen von jeweils zwischen 0.001 Gew.-% und 10 Gew.-%, bevorzugt 0.01 Gew.-% und 1 Gew.-% vorzugsweise zwischen 0.1-1 Gew.-% und ganz besonders bevorzugt zwischen 0.2 und 0.6 Gew.-% eingesetzt.

Besonders geeignet als Antioxidantien (auch Thermostabilisatoren genannt) sind Phosphite, gehinderte Phenole, aromatische, aliphatische oder gemischte Phosphine, Lactone, Thioether und gehinderte Amine (HALS), wobei die Thermostabilisatoren gegebenenfalls naturgemäß teilweise auch in einer oxidierten Form vorliegen können.

Ganz besonders bevorzugt sind Triphenylphosphin, Tris-(2-Ethylhexyl)-phosphat (TOF), Triphenylphosphin, Tetra-kis(2,4-di-*tert*-butylphenyl)-4,4'-biphenylen-diphosphonit (Irgafos® PEPQ), Octa-decyl-3-(3',5'-di-*tert*-butyl-4'-hydroxyphenyl)-propionat (Irganox® 1076), Tris(2,4-di-*tert*-butyl-phenyl)-phosphit (Irgafos® 168), sowie Anox® TB123 (Mischung aus Octadecyl-3-(3',5'-di-*tert*-butyl-4'-hydroxyphenyl)-propionat, Tris(2,4-di-*tert*-butyl-phenyl)phosphit und Distearyl-3,3'-thiodipropionat) (Produkt der Great Lakes Chemical Corp. Lafayette, IN, USA) Anox® TB331 (Mischung aus Tris(2,4-di-*tert*-butyl-4-hydroxyhydrocinnamate)methan, Tris(2,4-di-*tert*-butyl-phenyl)-phosphit und Distearyl-3,3'-thiodipropionat) (Produkt der Great Lakes Chemical Corp. Lafayette, IN, USA), sowie Irganox® HP2921 (Mischung aus Octadecyl-3-(3',5'-di-*tert*-butyl-4'-hydroxyphenyl)-propionat, Tris(2,4-di-*tert*-butyl-phenyl)phosphit und 5,7-di-tert-butyl-3-(3,4-di-methylphenyl)-3H-benzofuran-2-one (Irganox® HP136, Ciba Spezialitätenchemie, Basel).

Eingesetzt werden die genannten UV-Absorber und Antioxidantien einzeln oder in beliebigen Gemischen, in Konzentrationen von 1 ppm - 10 Gew.-%, wobei die Zugabe in Substanz, als Pulver oder Schmelze oder aber als Lösung vor oder während der Aufarbeitung, aber auch in einem anschließenden Kompoundierschritt erfolgen kann.

Die erfindungsgemäßen Formmassen können zu Formkörpern verarbeitet werden, indem man beispielsweise die Formmassen zu Granulaten extrudiert und diese Granulate, gegebenenfalls nach Zusatz der obengenannten Additive, durch Spritzguß oder Extrusion zu verschiedenen Artikeln in bekannter Weise verarbeitet.

Die erfindungsgemäßen Formmassen sind als transparente Formkörper universell einsetzbar, wo Wärmedurchlässigkeit unerwünscht ist. Besonders geeignet ist die Anwendung bei Automobilkomponenten oder für Gebäude, wie z.B. Verscheibungselemente oder Kunststoffstreuscheiben für Automobilscheinwerfer. Ebenfalls besonders geeignet ist die Anwendung bei extrudierten Platten, wie z.B. Massivplatten, Hohlraumplatten, Doppelstegplatten oder

Multistegplatten, optional auch mit einer oder mehreren coextrudierten Schichten, sowie die Anwendung in Spritzgußteilen, wie Lebensmittelbehälter, Bestandteilen von Elektrogeräten und in Brillengläser z.B. auch für Schutzbrillen, in optischen Datenspeichermedien oder in Wärmefiltern.

Die erfindungsgemäßen Formmassen eignen sich auch zum Kennzeichnen von Kunststoffen zwecks Recycling oder zu Sortierungszwecken. Dabei wirkt das Phthalocyanin oder das Naphthalocyanin als Erkennungsmerkmal, das z.B. durch sein Absorptionsspektrum erkannt werden kann.

## Beispiele

Zur Herstellung der Probekörper wurde ein additivfreies, unstabilisiertes Bisphenol-A-Polycarbonat (Makrolon® 3208 der Bayer AG, Leverkusen) mit einem mittleren Molekulargewicht von ca. 32 000 ($M_w$ nach GPC), Lösungsviskosität: $\eta$=1,32 (0,5 g/l Methylenchlorid, 20°C), bei 300°C auf einem Extruder mit der angegebenen Menge Additiv kompoundiert und anschließend granuliert. Aus diesem Granulat wurden anschließend Farbmusterplatten durch Spritzguß hergestellt (76 mm x 50 mm x 2.5 mm). Die Beispiele sind in Tabelle 1 zusammengefaßt. Die Trübung wurde nach der Vorschrift ASTM D 1003 bestimmt.

Tabelle 1

| Nr. | Zusammensetzung | Trübung [%] |
|---|---|---|
| Beispiel 1 | Makrolon® 3208 mit 157 ppm Vanadyl 5,14,23,32-tetraphenyl-2,3-naphthalocyanin, 0.5 % Tinuvin® 326 FL (Ciba), 0.5 % Irganox® 1076 (Ciba), 0.5 % Irgafos® 168 (Ciba) | 0.58 % |
| Beispiel 2 | Makrolon® 3208 mit 103 ppm Vanadyl 2,11,20,29-tetra-*tert*-butyl-2,3-naphthalocyanin, 0.5 % Tinuvin® 326 FL, 0.5 % Irganox® 1076, 0.5 % Irgafos® 168 | 1.09 % |
| Beispiel 3 | Makrolon® 3208 mit 109 ppm Kupfer(II) 1,4,8,11,15,18,22,25-octabutoxy-29H,31H-phthalocyanin, 0.5 % Tinuvin® 326 FL, 0.5 % Irganox® 1076, 0.5 % Irgafos® 168 | 0.59 % |
| Beispiel 4 | Makrolon® 3208 mit 102 ppm Vanadyl 2,9,16,23-tetraphenoxy-29H, 31H-phthalocyanin, 0.25 % Tinuvin® 234 (Ciba) | 0.59 % |
| Beispiel 5 | Makrolon® 3208 mit 69 ppm Vanadyl 5,14,23,32-tetraphenyl-2,3-naphthalocyanin, 72 ppm Kupfer(II) 1,4,8,11,15,18,22,25-octabutoxy-29H,31H-phthalocyanin, 0.5 % Tinuvin® 326 FL, 0.5 % Irganox® 1076, 0.5 % Irgafos® 168 | 0.53 % |
| Beispiel 6 | Makrolon® 3208 mit 68 ppm Vanadyl 5,14,23,32-tetraphenyl-2,3-naphthalocyanin, 72 ppm Kupfer(II) 1,4,8,11,15,18,22,25-octabutoxy-29H,31H-phthalocyanin, 38 ppm Vanadyl 2,9,16,23-tetraphenoxy-29H,3 1H-phthalocyanin, 0.27 % Tinuvin® 234 | 1.01 % |
| Vergleichsbeispiel 1 | Makrolon® 3208 mit 0.5 % Tinuvin® 326 FL, 0.5 % Irganox® 1076, 0.5 % Irgafos® 168 | 0.93 % |
| Vergleichsbeispiel 2 | Makrolon® 3208 mit 157.5 ppm Vanadyl(IV)- 3,10,17,24-tetra-tert.-butyl-1,8,15,22-tetrakis-(dimethylamino)-29H,31H-phthalocyanin (Aldrich), 0.5 % Tinuvin® 326 FL, 0.5 % Irganox® 1076, 0.5 % Irgafos® 168 | 1.18 % |
| Vergleichsbeispiel 3 | Makrolon® 3208 mit 28 ppm Excolor® 803 K (Nippon Shokubai), 0.25 % Tinuvin® 234 | Nicht gemessen |

Wie Tabelle 1 zeigt, weisen die untersuchten Formmassen mit Naphthalocyaninen und Phthalocyaninen eine niedrige Trübung auf.

Tabelle 2

| Lösungsviskosität von Farbmusterplatten in Methylenchlorid (0,5 g/l Methylenchlorid, 20°C). | |
|---|---|
| Probe | Lösungsviskosität |
| Vergleichsbeispiel 1 | 1.292 |
| Beispiel 2 | 1.301 |
| Vergleichsbeispiel 2 | 1.270 |

Tabelle 2 zeigt deutlich, daß der Formkörper von Vergleichsbeispiel 2, welcher das aminogruppenhaltige Phthalocyanin enthält eine deutlich niedrigere Viskosität aufweist, als das farbstofffreie Makrolon (Vergleichsbeispiel 1) oder das mit aminogruppenfreiem NIR-Farbstoff versetzte (Beispiel 2). Dies beweist einen Abbau der Polymermatrix durch diesen aminogruppenhaltigen Farbstoff.

Als Maß für die Transmission im sichtbaren Bereich des Lichtes wurde der TLT-Wert (total luminous transmittance) bestimmt; als Maß für die Durchlässigkeit der gesamten Sonnenenergie der TSET-Wert (total solar energy transmittance). Das Ziel ist daher, einen möglichst niedrigen TSET-Wert bei gleichzeitig möglichst hohem TLT-Wert zu erhalten. Die Transmissionsspektren wurden mit einem herkömmlichen UV-VIS-NIR-Spektrometer "lamda 9" der Firma Perkin Elmer gemessen. Daraus wurden gemäß der Methode von Parry Moon der TSET-Wert bestimmt. Ferner wurde der TLT-Wert gemäß SAE J1796 bestimmt. Die von den Beispielen 1-7 erhaltenen TLT und TSET-Werte sind in Tabelle 3 aufgeführt.

Der TSET-Wert wird nach der Methode nach Parry Moon nach folgender Formel berechnet:

$$TSET = \Sigma_\lambda G_\lambda T_{Probe} (\lambda) / \Sigma_\lambda G_\lambda$$

$T_{Probe}$ ($\lambda$) bezeichnet die Transmission der gemessenen Probe in Abhängigkeit der Wellenlänge in Prozent. Die Werte für $G_\lambda$ stammen aus der eingangs erwähnten Publikation von Parry Moon, Seite 604, Tabelle III. Es wurde von 30 bis 780 nm eine Schrittweite von 10 nm verwendet und zwischen 800 nm und 2100 nm eine Schrittweite von 50 nm, die entsprechend gewichtet wurde.

Danach wurden die Proben 500 h gemäß SAE 1960 bewittert und anschließend die TLT-Werte und die TSET-Werte bestimmt. Die Ergebnisse dieser Untersuchungen sind in Tabelle 3 zusammengefaßt:

Tabelle 3

| TLT-Werte und TSET-Werte vor und nach 500 h Bewitterung nach SAE 1960 | | | | |
|---|---|---|---|---|
| Nr. | TLT (0 h) | TSET (0 h) | TLT (500 h) | TSET (500 h) |
| Beispiel 1 | 80 | 62 | 78 | 61 |
| Beispiel 2 | 80 | 60 | 78 | 59 |
| Beispiel 3 | 78 | 64 | 75 | 63 |
| Beispiel 4 | 65 | 63 | 62 | 61 |
| Beispiel 5 | 79 | 60 | Nicht gemessen | Nicht gemessen |
| Beispiel 6 | 69 | 53 | Nicht gemessen | Nicht gemessen |
| Vergleichsbeispiel 1 | 88 | 86 | Nicht gemessen | Nicht gemessen |
| Vergleichsbeispiel 3 | 76 | 70 | Nicht gemessen | Nicht gemessen |

Wie aus Tabelle 3 zu entnehmen ist, weisen die erfindungsgemäßen Formmassen mit erfindungsgemäßen Phthalocyaninen und Naphthalocyaninen (Bsp. 1-4) einen verbesserten TSET-Wert im Vergleich zum Stand der Technik in Vergleichsbeispiel 3 bei vergleichbarem TLT-Wert auf. Im Vergleich zu Polycarbonat ohne NIR-Absorber wird der TLT-Wert nur geringfügig geringer, aber der TSET-Wert erheblich niedriger, d.h. man erhält Formmassen, welche einen großen Teil der Sonnenwärme absorbieren (TSET-Wert) und dennoch den größten Teil des sichtbaren Lichtes durchlassen (TLT-Wert).

Besonders vorteilhaft sind auch Mischungen aus Naphthalocyaninen und Phthalocyaninen, wie die TLT und TSET-Werte der Bsp. 5 und 6 zeigen.

Aus den beschriebenen Ergebnissen wird eindeutig ersichtlich, daß die hier beschriebenen Formmassen bei hervorragender Lichtstabilität, bessere optischen Eigenschaften besitzen als herkömmliche NIR-Farbstoffe. Gleichzeitig sind sie halogenfrei, zeigen keine Geruchsbelästigung und keinen Abbau des Polycarbonats beim Verarbeiten und sind somit für Anwendungen als Verscheibungen, Wärmefilter etc. besonders gut geeignet.

## Patentansprüche

**1.** Formmassen enthaltend

a) einen transparenten thermoplastischen Kunststoff und

b) 0,1 ppm bis 1 Gew.-%, bezogen auf die Masse des transparenten thermoplastischen Kunststoffes, eines Phthalocyanines der allgemeinen Formel (I)

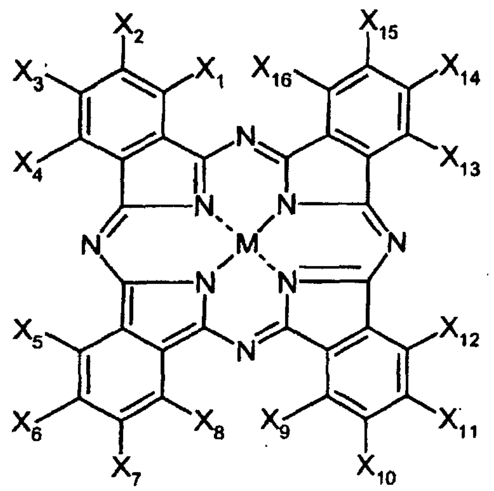

(I)

wobei

M VO oder Cu ist und

$X_1$ bis $X_{16}$ unabhängig voneinander Wasserstoff, oder ein aliphatischer Rest, oder ein aromatischer Rest, oder ein Alkoxyrest, oder ein Aryloxyrest sind, wobei alle diese Reste keine N-Atome, keine S-Atome und keine Halogenatome enthalten sollen und wobei mindestens einer der Substituenten $X_1$ bis $X_{16}$ nicht Wasserstoff ist.

**2.** Formmassen enthaltend

a) einen transparenten thermoplastischen Kunststoff und
b) 0,1 ppm bis 1 Gew.-%, bezogen auf die Masse des transparenten thermoplastischen Kunststoffes, eines Naphthalocyanines der allgemeinen Formel (II)

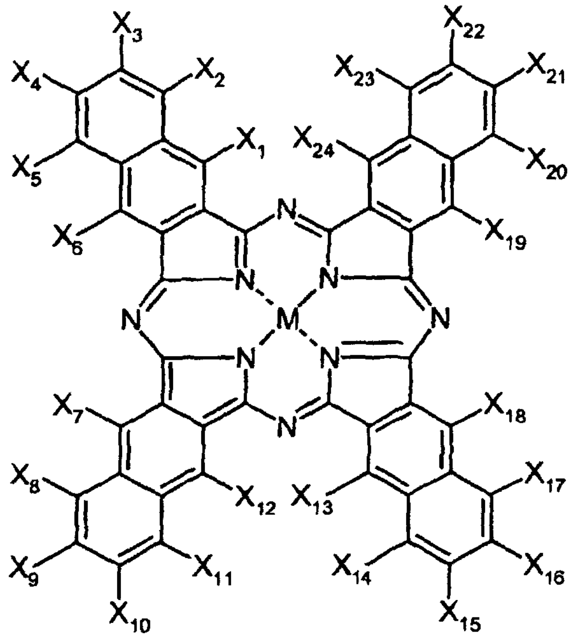

(II)

wobei

M VO oder Cu ist

und

$X_1$ bis $X_{24}$ unabhängig voneinander Wasserstoff, oder ein aliphatischer Rest, oder ein aromatischer Rest, oder ein Alkoxyrest, oder ein Aryloxyrest sind, wobei alle diese Reste keine N-Atome, keine S-Atome und keine Halogenatome enthalten sollen und wobei mindestens einer der Substituenten $X_1$ bis $X_{24}$ nicht Wasserstoff ist.

3. Formmassen gemäß einem der Ansprüche 1 oder 2, wobei der transparente thermoplastische Kunststoff Polycarbonat ist.

4. Verfahren zur Herstellung der Formmassen gemäß einem der Ansprüche 1 bis 3, wobei die Bestandteile der Formmasse durch einen Extruder gemischt werden und der transparente thermoplastische Kunststoff während des Mischens aufgeschmolzen wird.

5. Verwendung der Formmassen gemäß einem der Ansprüche 1 bis 3 zur Herstellung von Verscheibungen.

6. Verscheibungen aus Formmassen gemäß einem der Ansprüche 1 bis 3.

7. Verscheibungen für Kraftfahrzeuge oder Gebäude aus Formmassen gemäß einem der Ansprüche 1 bis 3

**Claims**

1. Moulding compositions containing

a) a transparent thermoplastic polymer and

b) 0.1 ppm to 1 wt.%, based on the mass of the transparent thermoplastic polymer, of a phthalocyanine of the general formula (I)

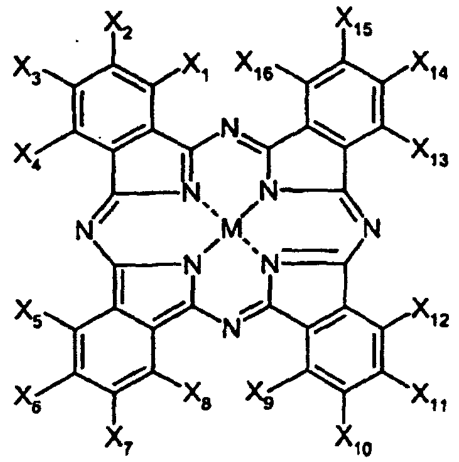

(I)

wherein

M is VO or Cu and

$X_1$ to $X_{16}$, independently of one another, are hydrogen, an aliphatic radical, an aromatic radical, an alkoxy radical or an aryloxy radical, wherein none of these radicals is to contain any N, S or halogen atoms and wherein at least one of the substituents $X_1$ to $X_{16}$ is not hydrogen.

**2.** Moulding compositions containing

a) a transparent thermoplastic polymer and

b) 0.1 ppm to 1 wt.%, based on the mass of the transparent thermoplastic polymer, of a naphthalocyanine of the general formula (II)

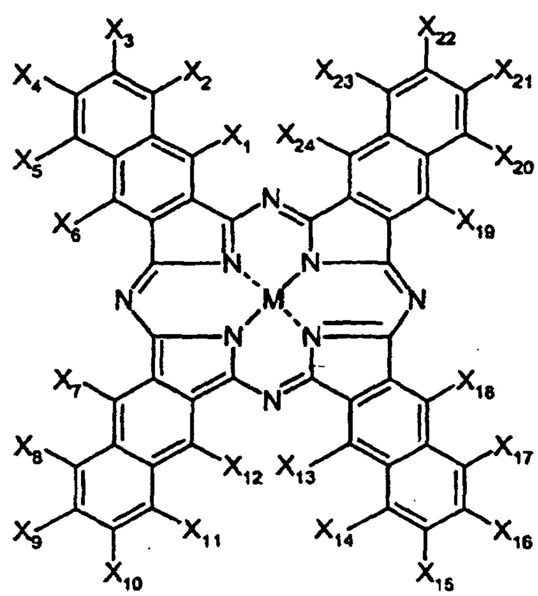

(II)

wherein

M is VO or Cu and

$X_1$ to $X_{24}$, independently of one another, are hydrogen, an aliphatic radical, an aromatic radical, an alkoxy radical or an aryloxy radical, wherein none of these radicals is to contain any N, S or halogen atoms and wherein at least one of the substituents $X_1$ to $X_{24}$ is not hydrogen.

**3.** Moulding compositions according to one of claims 1 or 2, wherein the transparent thermoplastic polymer is polycarbonate.

**4.** Process for the production of the moulding compositions according to any one of claims 1 to 3, wherein the components of the moulding composition are mixed by an extruder and the transparent thermoplastic polymer is melted during mixing.

**5.** Use of the moulding compositions according to any one of claims 1 to 3 for the production of glazing.

**6.** Glazing made of moulding compositions according to any one of claims 1 to 3.

**7.** Glazing for motor vehicles or buildings made of moulding compositions according to any one of claims 1 to 3.

**Revendications**

**1.** Matières à mouler contenant :

a) une matière thermoplastique transparente, et
b) 0,1 ppm à 1% en poids, sur base de la masse de la matière thermoplastique transparente, d'une phtalocyanine de la formule générale (I) :

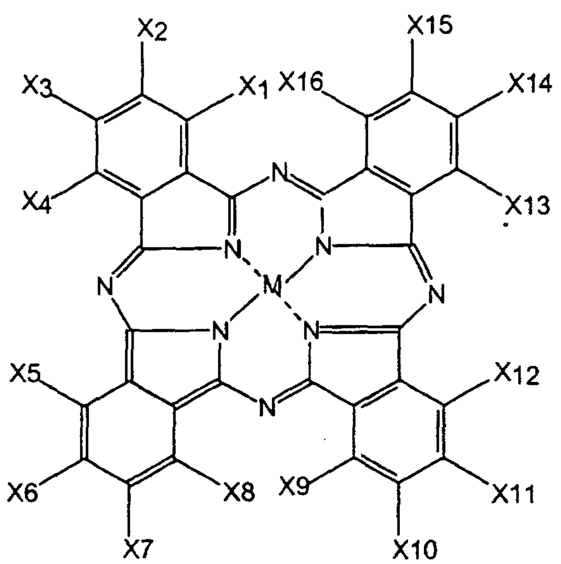

(I)

où
M est VO ou Cu, et
$X_1$ à $X_{16}$ représentent indépendamment l'un de l'autre, l'atome d'hydrogène ou un reste aliphatique, ou un reste aromatique, ou un reste alcoxy, ou un reste aryloxy, où tous ces restes ne peuvent contenir aucun atome N, aucun atome S et aucun atome d'halogène et où au moins un des substituants $X_1$ à $X_{16}$ n'est pas l'atome d'hydrogène.

**2.** Matières à mouler contenant :

a) une matière thermoplastique transparente, et

b) 0,1 ppm à 1% en poids, sur base de la masse de la matière thermoplastique transparente, d'une naphtalocyanine de la formule générale (II) :

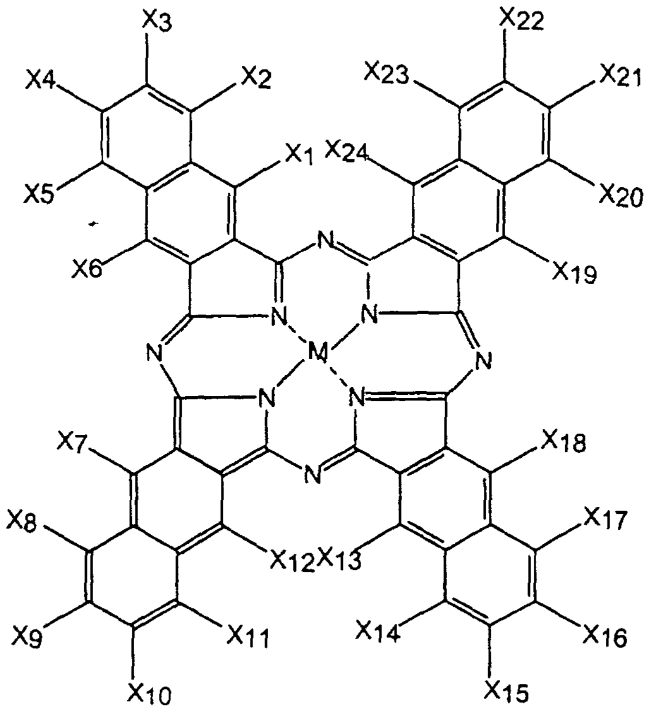

(II)

où

M est VO ou Cu, et

$X_1$ à $X_{24}$ représentent indépendamment l'un de l'autre, l'atome d'hydrogène ou un reste aliphatique, ou un reste aromatique, ou un reste alcoxy, ou un reste aryloxy, où tous ces restes ne peuvent contenir aucun atome N, aucun atome S et aucun atome d'halogène et où au moins un des substituants $X_1$ à $X_{24}$ n'est pas l'atome d'hydrogène.

**3.** Matières à mouler suivant l'une quelconque des revendications 1 ou 2, où la matière thermoplastique transparente est un polycarbonate.

**4.** Procédé de préparation des matières à mouler suivant l'une quelconque des revendications 1 à 3, où les constituants de la matière à mouler sont mélangés par une extrudeuse et la matière thermoplastique transparente est fondue pendant le mélange.

**5.** Utilisation des matières à mouler suivant l'une quelconque des revendications 1 à 3, pour la préparation de vitrages.

**6.** Vitrages constitués de matières à mouler suivant l'une quelconque des revendications 1 à 3.

**7.** Vitrages pour véhicules automobiles ou bâtiments, constitués de matières à mouler suivant l'une quelconque des revendications 1 à 3.